# EUROPÄISCHE PATENTSCHRIFT

(11) **EP 1 054 169 B1**
(45) Veröffentlichungstag und Bekanntmachung des Hinweises auf die Patenterteilung: **17.08.2005**
(21) Anmeldenummer: 00108312.0
(22) Anmeldetag: 15.04.2000
(51) Int. Cl.: F16B 19/04, B21J 15/02, F16B 19/06

(54) **Stanz-Prägeniet**
Piercing rivet
Rivet poinçonnant

(30) Priorität: 21.05.1999 DE 29908928 U
(43) Veröffentlichungstag der Anmeldung: 22.11.2000
(73) Patentinhaber: Kerb-Konus-Vertriebs-GmbH, 92224 Amberg (DE)
(72) Erfinder: Donhauser, Georg, 92224 Amberg (DE)
(74) Vertreter: Rapp, Bertram, Dr.

(56) Entgegenhaltungen:
- DE-U- 29 822 745
- US-A- 3 909 913
- US-A- 4 531 871
- US-A- 4 978 270

## Beschreibung

Die Erfindung betrifft einen Stanz-Prägeniet nach dem Oberbegriff des Anspruches 1. Ein derartiger Stanz-Prägeniet ist aus DE-U-298 22 745 bekannt.

Stanz-Prägeniete dienen der Verbindung zweier oder mehrerer flacher Werkstücke. Der Stanzniet wird hierbei unter Bildung zweier Stanzlöcher mit seinem Schaft durch die Werkstücke gedrückt. Das in Stanzrichtung gesehen untere Werkstück besteht aus einem plastisch verformbaren Material, üblicherweise einem Blech. Nahe dem Schaftende weist der Schaft eine Schaftnut auf. Nach dem Stanzvorgang wird um das Schaftende herum in das untere Werkstück durch ein Werkzeug eine Ringnut geprägt, wodurch Material des unteren Werkstücks in die Schaftnut gedrückt wird.

Der aus der DE-U-298 22 745 bekannte Stanz-Prägeniet weist einen kegelstumpfförmigen Nietkopf mit einem sich daran anschließenden Schaft auf. In dem Schaft ist eine konkav ausgebildete Schaftnut vorgesehen. Bei einem derartigen Stanz-Prägeniet ergibt sich jedoch die Problematik, dass die Länge des Niets und die Lage der einzigen Schaftnut relativ genau auf die Solldicke der beiden zu fügenden Werkstücke abgestimmt sein müssen. Wenn dagegen Schwankungen in der Fügeteildicke auftreten, wird entweder zu wenig Material in die Schaftnut gedrückt oder es kommt überhaupt keine Nietverbindung zustande.

Aus der US-A-4 978 270 ist ein kopfloser Niet bekannt, der zur Verbindung mehrerer übereinander liegender Teile einen Schaft mit mehreren Schaftnuten und einer in der Mitte angeordneten Schulter enthält. Auch bei diesem bekannten Niet muss jedoch die Nietlänge genau auf die Dicke der zu verbindenden Teile abgestimmt sein und auch die Form der Schaftnuten wird durch die auf die Materialdicke abgestimmte Nietlänge bestimmt.

Es besteht die Aufgabe, den Stanz-Prägeniet so zu gestalten, dass auch unterschiedliche Fügeteildicken mit einem Niettyp prozesssicher und qualitätsgerecht verbunden werden können. Gelöst wird diese Aufgabe mit den Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:

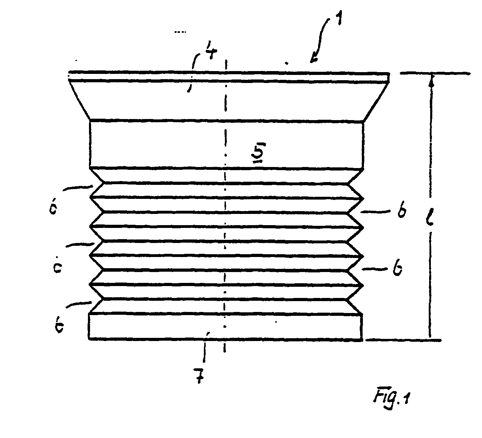

- **Figur 1**: Eine Seitenansicht des Stanz-Prägeniets und
- **Figur 2**: den Stanz-Prägeniet nach Figur 1 zur Verbindung von unterschiedlich dicken Bauteilen.

Der Stanz-Prägeniet ist in seiner Gesamtheit mit 1 bezeichnet. Die mit dem Niet hergestellte Nietverbindung verbindet ein oberes Blechteil 2 mit einem unteren Blechteil 3A bzw. 3B. Der Niet 1 weist einen kegelstumpfförmigen Nietkopf 4 und einen sich daran anschließenden Schaft 5 auf. Der Schaft 5 ist mit mehreren Schaftnuten 6 versehen, an welche sich nach unten ein zylinderischer Abschnitt 7 des Schafts 5 anschließt.

Zum Herstellen der Nietverbindung wird der Niet 1 von oben nach unten durch die Blechteile 2, 3A bzw. 3B gedrückt, womit in den Blechteilen 2, 3 miteinander fluchtende Stanzlöcher entstehen. Nach Beendigung des Stanzvorgangs wird mittels eines ringförmigen Werkzeugs um den Schaft 5 herum eine Nut 8A bzw. 8B geprägt, wodurch bewirkt wird, daß Material des unteren Blechs 3A bzw. 3 B unter plastischer Deformation in Schaftnuten 6 gedrückt wird und diese ausfüllt.

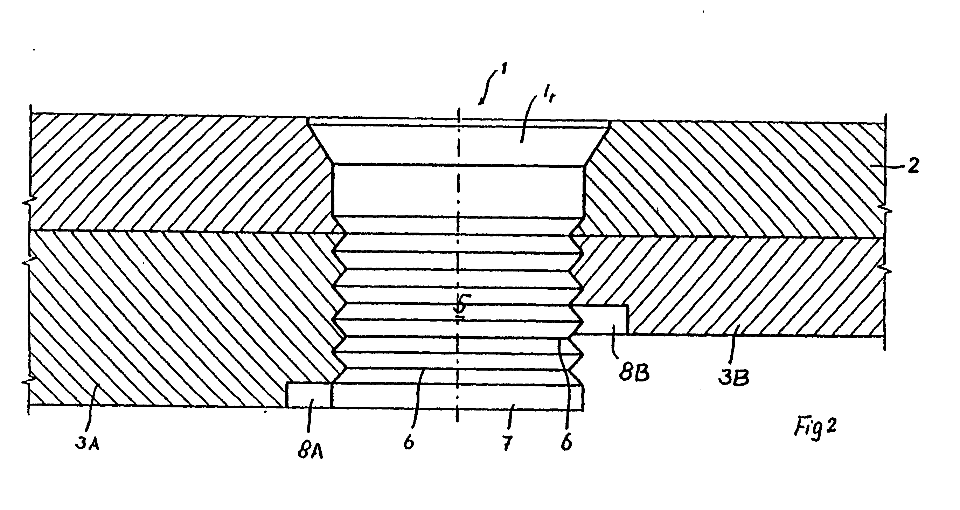

Bei der linksseitigen Darstellung in Figur 2 entspricht die Gesamtdicke der beiden Blechteile 2, 3A der Länge 1 des Niets 1. Die Nut 8A wird um den Abschnitt 7 herum geprägt, so daß durch diese Prägung primär Material in die untere Schaftnut 6 gedrückt wird und diese ausfüllt.

Bei der rechtsseitigen Darstellung in Figur 2 ist die Gesamtdicke der Blechteile 2, 3B geringer als die Länge 1 des Niets 1. Die Nut 8B wird beim Blechteil 3B im mittleren Teil des Nuten 6 aufweisenden Abschnitts des Schafts 5 erzeugt, wodurch Material primär in die darüberliegende Nut 6 gedrückt wird und diese ausfüllt.

Wie ersichtlich, können die Blechteile 3A, 3B unterschiedliche Dicke aufweisen. Durch das Vorsehen mehreren Schaftnuten 6 ist es auch möglich, Nietverbindungen bei Blechteilen 2, 3 herzustellen, welche stark unterschiedliche Dickentoleranzen aufweisen.

Im gezeigten Ausführungsbeispiel sind die Schaftnuten 6 ringförmig ausgebildet. Es ist jedoch auch möglich, die Schaftnuten 6 wendelförmig anzuordnen. Im dargestellten Ausführungsbeispiel weisen die Schaftnuten einen dreiecksförmigen Querschnitt auf. Es ist jedoch auch möglich, daß die Schaftnuten konkav ausgebildet sind. Insbesondere ist dann der dem Nietkopf 4 zugewandte Abschnitt jeder Schaftnut unter einem flacheren Winkel zur Schaftachse angeordnet, als der dem Schaftende zugewandte Abschnitt der Schaftnut 6. Eine solche Ausbildung ist beispielsweise dem DE-U-298 22 745 entnehmbar.

Es ist auch möglich, daß mindestens der die Nuten 6 aufweisende Schaftabschnitt sich in Richtung des zylinderischen Abschnitts 7 konisch verjüngend ausgebildet ist. Hierbei ist es möglich, daß der Nutengrund aller Nuten 6 den gleichen Durchmesser aufweisen.

## Patentansprüche

1. Stanz-Prägeniet mit einem kegelstumpfförmigen Nietkopf (4) und einem sich daran anschließenden Schaft (5) der mindestens eine Schaftnut (6) aufweist, wobei zur Herstellung einer Nietverbindung zwischen mindestens zwei aneinanderliegenden Bauteilen (2, 3A bzw. 3B) der Schaft (5) die Bauteile (2, 3A bzw. 3B) unter Bildung eines Stanzloches durchstanzt und anschließend um das Schaftende herum beim dortigen Bauteil (3A, 3B) eine Nut (8A, 8B) geprägt wird, wodurch unter plastischer Verformung Material des dortigen Bauteils (3A, 3B) in die mindestens eine Schaftnut (6) eindringt **dadurch gekennzeichnet, daß** am Schaft (5) mindestens zwei Schaftnuten (6) angeordnet sind.

2. Stanz-Prägeniet nach Anspruch 1, **dadurch gekennzeichnet, daß** der Schaft (5) einen ausschließlich Schaftnuten (6) aufweisenden Abschnitt aufweist.

3. Stanz-Prägeniet nach Anspruch 1 oder 2, **dadurch gekennzeichnet, daß** zwischen dem Schaftnutengrund der einen Schaftnut (6) und dem Schaftnutengrund der benachbarten Schaftnut (6) die gemeinsame Spitze beider Schaftnuten (6) angeordnet ist.

4. Stanz-Prägeniet nach einem der Ansprüche 1 bis 3, **dadurch gekennzeichnet, daß** die Schaftnuten (6) ringförmig ausgebildet sind.

5. Stanz-Prägeniet nach einem der Ansprüche 1 bis 3, **dadurch gekennzeichnet, daß** die Schaftnuten (6) wendelförmig ausgebildet sind.

6. Stanz-Prägeniet nach einem der Ansprüche 1 bis 5, **dadurch gekennzeichnet, daß** die Schaftnuten (6) einen dreiecksförmigen Querschnitt aufweisen.

7. Stanz-Prägeniet nach einem der Ansprüche 1 bis 5, **dadurch gekennzeichnet, daß** mindestens eine der Schaftnuten konkav ausgebildet ist und der dem Nietkopf (4) zugewandte Abschnitt der Schaftnut (6) unter einem flacheren Winkel zur Schaftachse verläuft als der dem Schaftende zugewandte Abschnitt der Schaftnut (6).

8. Stanz-Prägeniet nach einem der Ansprüche 1 bis 7, **dadurch gekennzeichnet, daß** mindestens der die Nuten (6) aufweisende Schaftabschnitt sich in Richtung des (7) dem Nietkopf (4) abgewandten zylinderischen Abschnitt (7) des Schafts (5) konisch verjüngend ausgebildet ist.

9. Stanz-Prägeniet nach Anspruch 8, **dadurch gekennzeichnet, daß** der Nutengrund aller Nuten (6) den gleichen Durchmesser aufweist.

## Claims

1. Piercing rivet with a rivet head (4) with the shape of a truncated cone and an adjoining shank (5) which exhibits at least one shank groove (6), with which to produce a riveted joint between at least two components (2, 3A and 3B) lying one on the other the shank (5) punches through the components (2, 3A and 3B) forming a punched hole, and then a groove (8A, 8B) is formed around the end of the shank in the component there (3A, 3B), through which material of the component there (3A, 3B) penetrates into the at least one shank groove (6) through plastic deformation, **characterised in that** at least two shank grooves (6) are arranged on the shank (5).

2. Piercing rivet according to claim 1, **characterised in that** the shank (5) exhibits a portion exhibiting exclusively shank grooves (6).

3. Piercing rivet according to claim 1 or 2, **characterised in that** the common vertex of two shank grooves (6) is arranged between the shank groove base of a first shank groove (6) and the shank groove base of the neighbouring shank groove (6).

4. Piercing rivet according to one of claims 1 to 3, **characterised in that** the shank grooves (6) are ringshaped.

5. Piercing rivet according to one of claims 1 to 3, **characterised in that** the shank grooves (6) are helical.

6. Piercing rivet according to one of claims 1 to 5, **characterised in that** the shank grooves (6) exhibit a triangular cross section.

7. Piercing rivet according to one of claims 1 to 5, **characterised in that** at least one of the shank grooves is concave and the portion of the shank groove (6) facing the rivet head (4) runs at a shallower angle to the axis of the shank than the portion of the shank groove (6) facing the shank end.

8. Piercing rivet according to one of claims 1 to 7, **characterised in that** at least the portion of the shank exhibiting the grooves (6) tapers conically in the direction of the cylindrical portion (7) of the shank (5) facing away from the rivet head (4).

9. Piercing rivet according to claim 8, **characterised in that** the groove base of all the grooves (6) exhibits the same diameter.

## Revendications

1. Rivet poinçonnant avec une tête de rivet de forme tronconique (4) et une tige se raccordant dessus (5) comportant au moins une rainure de tige (6), sachant que pour la fabrication d'un assemblage rivé entre au moins deux composants placés l'un à côté de l'autre (2, 3A ou 3B) la tige (5) poinçonne les composants (2, 3A ou 3B) en formant un trou poinçonné et ensuite une rainure (8A, 8B) est estampée autour de l'extrémité de la tige dans le composant qui se trouve là (3A, 3B), au moyen de laquelle, sous déformation plastique, de la matière du composant qui se trouve là (3A, 3B) pénètre dans au moins une des rainures de tige (6), **caractérisé en ce que** au moins deux rainures de tige (6) sont disposées sur la tige (5).

2. Rivet poinçonnant selon la revendication 1, **caractérisé en ce que** la tige (5) comporte un tronçon comportant exclusivement des rainures de tige (6).

3. Rivet poinçonnant selon la revendication 1 ou 2, **caractérisé en ce que** entre le fond des rainures de tige de l'une des rainures de tige (6) et le fond des rainures de tige de la rainure de tige voisine (6) est disposée la pointe commune des deux rainures de tige (6).

4. Rivet poinçonnant selon l'une des revendications 1 à 3, **caractérisé en ce que** les rainures de tige (6) ont une forme circulaire.

5. Rivet poinçonnant selon l'une des revendications 1 à 3, **caractérisé en ce que** les rainures de tige (6) ont une forme hélicoïdale.

6. Rivet poinçonnant selon l'une des revendications 1 à 5, **caractérisé en ce que** les rainures de tige (6) ont une section transversale de forme triangulaire.

7. Rivet poinçonnant selon l'une des revendications 1 à 5, **caractérisé en ce que** au moins l'une des rainures de tige a une forme concave et que le tronçon de la rainure de tige (6) tourné vers la tête de rivet (4) passe sous un angle plus plat par rapport à l'axe de la tige que le tronçon de la rainure de tige (6) tourné vers l'extrémité de la tige.

8. Rivet poinçonnant selon l'une des revendications 1 à 7, **caractérisé en ce que** au moins le tronçon de tige comportant les rainures (6) est configuré en diminuant comme un cône dans le sens du tronçon cylindrique (7) de la tige (5) détourné de la tête de rivet (4).

9. Rivet poinçonnant selon la revendication 8, **caractérisé en ce que** le fond des rainures de toutes les rainures (6) a le même diamètre.
